# EUROPÄISCHE PATENTANMELDUNG

(11) **EP 4 764 280 A1**
(43) Veröffentlichungstag der Anmeldung: **24.06.2026**
(21) Anmeldenummer: 25224487.6
(22) Anmeldetag: 17.12.2025
(51) Int. Cl.: F16L 13/14, F16L 15/00, F16L 15/08

(54) **FITTING UND GEWINDEDICHTUNG ZUM HERSTELLEN EINER FLUIDDICHTEN SCHRAUBVERBINDUNG FÜR EIN EIN AUSSENGEWINDE AUFWEISENDES ROHR**

(30) Priorität: 20.12.2024 DE 102024139196; 20.12.2024 DE 102024139195; 16.12.2025 EP 25224033
(71) Anmelder: Viega Technology GmbH & Co. KG, 57439 Attendorn (DE)
(72) Erfinder: Dasbach, Philipp, 57234 Wilnsdorf (DE); Lindemann, David, 51647 Gummersbach (DE)
(74) Vertreter: Cohausz & Florack

(57) **Zusammenfassung**

Die Erfindung betrifft ein Fitting zum Herstellen einer fluiddichten Schraubverbindung für ein ein Außengewinde (4) aufweisendes Rohr (6), mit einem Fittinggrundkörper (8), mit einer mit dem Fittinggrundkörper (8) verbundenen Presshülse (10), mit einer in der Presshülse (10) ausgebildeten Kammer (12), mit einer in der Kammer (12) angeordneten und ein Innengewinde (16) aufweisenden Gewindedichtung (14), mit einer an der Presshülse (10) angeordneten ersten Markierung (18, 18') und mit einer an der Gewindedichtung (14) angeordneten zweiten Markierung (20, 20'), wobei die Markierungen (18, 18'; 20, 20') ausgehend von der gleichen Mittelachse des Innengewindes (16) der Gewindedichtung (14) und der Presshülse (10) rotatorisch zueinander ausrichtbar sind. Es wird die Aufgabe gelöst, ein Fitting und eine Gewindedichtung für ein Fitting zum Herstellen einer fluiddichten Schraubverbindung für ein ein Außengewinde aufweisendes Rohr und einen Fitting selbst zur Verfügung zu stellen, bei dem die aus dem Stand der Technik bekannten Nachteile nicht oder zumindest weniger deutlich auftreten.

## Beschreibung

Die Erfindung betrifft ein Fitting und eine Gewindedichtung zum Herstellen einer fluiddichten Schraubverbindung für ein ein Außengewinde aufweisendes Rohr.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Fittings werden häufig als Pressverbinder ausgebildet, bei dem das Fitting und ein zu verbindendes Rohr mit einer radialen Umformung verbunden werden. Bei bestimmten Anwendungsfällen wie beispielsweise bei Anschlüssen mit vorgegebenen Gewinden sind als Fitting fluiddichte Schraubverbindungen erforderlich, um ein Austreten von Flüssigkeiten oder Gasen aus einem geschlossenen System zu verhindern.

Im Stand der Technik wird dafür ein Verbindungselement vorgeschlagen, dessen Außengewinde mit einer Polyamidschicht überzogen ist. Außengewinde mit PTFE-Dichtung sind in der Sanitär- und Heizungsinstallation weit verbreitet. Diese Verbinder haben einen Bereich mit einem metallischen Außengewinde und einen Bereich in dem ein PTFE-Ring als Gewindedichtung sitzt. Diese Dichtung hat kein Gewinde. Während der Montage schneidet sich das Gegenstück in die PTFE-Dichtung und dichtet so auf dem Innengewinde ab. Weitere übliche Mittel zum Abdichten sind Hanf im Zusammenspiel mit einem Gewindedichtmittel, PTFE-Band oder andere Dichtmittel zum Auftragen.

Derartige thermoplastische Dichtmittel wie Polyamid weisen eine Reihe von Nachteilen auf, insbesondere weisen die bekannten Dichtmittel keine dauerhafte Elastizität auf. Die bekannten Dichtmittel werden also mit der Zeit spröde und verlieren nach und nach ihre Dichtmitteleigenschaften. Höhere Temperaturen oder gar größere Schwankungen der Temperatur, durch die das Dichtmittel abwechselnd aufgeheizt und wieder abgekühlt wird, begünstigen noch das Verspröden des Dichtmittels und damit das Auftreten von Undichtigkeiten.

Neben den nachteiligen Teflonbändern ist auch das Anbringen von Dichtelementen aus Kunststoff wie PTFE auf dem Außengewinde oder dem Innengewinde bekannt. Während des Zusammenschraubens der Gewindeelemente bewirkt die Kunststoffdichtung eine Abdichtung des Gewindes.

Aus dem Stand der Technik ist bekannt, zwischen dem Gewindeabschnitt des anzuschließenden Rohrabschnitts und dem Fitting eine einteilige oder zweiteilige Dichtung bzw. Gewindedichtung mit einem innen ausgebildeten Gewindeabschnitt vorzusehen. Das Fitting wird bei der Montage radial nach innen verpresst und die Dichtung bzw. die Gewindedichtung dichtet dann im verpressten Zustand des Fittings dauerhaft ab und kann gleichzeitig thermisch und/oder mechanisch hervorgerufene Distanzänderungen zwischen dem Fitting und dem Rohrabschnitt ausgleichen. Derartige Fittings werden auch Gewindepressverbinder genannt.

Eine Anforderung an einen derartigen Gewindepressverbinder ist, dass sich die Gewindedichtung beim Einschrauben des Rohrabschnitts nicht oder nur gering gegenüber dem Fittinggrundkörper verdreht, damit eine wirksame Schraubverbindung zwischen dem Fitting mit der Gewindedichtung und dem Rohrabschnitt entsteht.

Im Stand der Technik wurde diesem Problem damit begegnet, dass nach dem Einsetzen der Gewindedichtung in das Fitting dieses mit einer ausreichend großen Anpresskraft an der Innenseite des Fittings anliegt, so dass die entstehende Haftreibung ausreicht, um dem beim Einschrauben des Rohrabschnitts entstehenden Drehmoment entgegenzuwirken.

Der vorliegenden Erfindung liegt daher die Aufgabe zugrunde, ein Fitting und eine Gewindedichtung für ein Fitting zum Herstellen einer fluiddichten Schraubverbindung für ein ein Außengewinde aufweisendes Rohr und einen Fitting selbst zur Verfügung zu stellen, bei dem die aus dem Stand der Technik bekannten Nachteile nicht oder zumindest weniger deutlich auftreten.

Die zuvor aufgeführte Aufgabe wird erfindungsgemäß durch ein Dichtungselement für ein Fitting zum Herstellen einer fluiddichten Schraubverbindung für ein ein Außengewinde aufweisendes Rohr gelöst mit einem Fittinggrundkörper, mit einer mit dem Fittinggrundkörper verbundenen Presshülse, mit einer in der Presshülse ausgebildeten Kammer, mit einer in der Kammer angeordneten und ein Innengewinde aufweisenden Gewindedichtung, mit einer an der Presshülse angeordneten ersten Markierung und mit einer an der Gewindedichtung angeordneten zweiten Markierung, wobei die Markierungen ausgehend von der gleichen Mittelachse des Innengewindes der Gewindedichtung und der Presshülse rotatorisch zueinander ausrichtbar sind.

Die Markierungen können dann bei der Montage der Gewindedichtung innerhalb der Presshülse in azimutaler Richtung, also in Drehrichtung in Übereinstimmung gebracht werden. Dadurch wird eine vordefinierte Winkelstellung der Gewindedichtung innerhalb der Presshülse durch ein einfaches Mittel erreicht.

Mittels der Markierungen kann der sogenannte Poka-Yoke-Effekt der Fehlervermeidung erreicht werden. Dieses ist ein Mechanismus oder eine Technik, die verhindern soll, dass menschliche Fehler in einem Fertigungs- oder Dienstleistungsprozess auftreten oder zu Defekten führen.

Bei einer ersten vorteilhaften Ausgestaltung sind die erste Markierung und die zweite Markierung zueinander zumindest teilweise korrespondierende mechanisch ausgebildete Markierungen. Die mechanisch ausgebildete Markierung kann auch als geometrische Markierung bezeichnet werden, da die Geometrie des jeweiligen Bauteils durch die mechanische Markierung verändert wird. Die mechanisch ausgebildeten Markierungen bewirken vorzugsweise einen Formschluss, wenn diese zueinander ausgerichtet sind.

Dabei können die die erste Markierung und die zweite Markierung eine Markierung vorzugsweise in Form einer Nut und einer Rippe oder eine in Form eines Anspritzpunkts ausgebildet sein. Insbesondere durch Fräsen kann eine solche Markierung in die Presshülse eingebracht werden. Die Gewindedichtung kann die mechanisch ausgestaltete Markierung on Form eines vorstehenden Elementes wie ein Nocken ausgebildet sein.

Dadurch ist es in vorteilhafter Weise möglich, dass die erste Markierung und die zweite Markierung einen Formschluss und/oder einen Kraftschluss zwischen der Gewindedichtung und der Presshülse ausbilden. Die Markierungen bewirken dann nicht nur eine richtige azimutale Ausrichtung der Gewindedichtung und der Presshülse zueinander, sondern die Markierung bewirken darüber hinaus eine Verdrehsicherung, wenn das Rohr mit dem Außengewinde in die Gewindedichtung eingeschraubt wird.

Ein Formschluss kann dabei so ausgeführt sein, dass die anliegenden Flächen ausreichend groß sind, um dem durch ein Einschrauben eines Außengewindes erzeugten Drehmoment entgegen zu wirken. Bei einem Kraftschluss muss die Haftreibung größer als das entstehende Drehmoment beim Einschrauben eines Außengewindes sein.

Eine mechanische bzw. geometrische Markierung hat zudem den Vorteil, dass eine fehlerhafte Montage und eine ungeplante Verdrehung von Gewindedichtung zum Fittinggrundkörper bzw. Presshülse weitgehend verhindert werden kann. Denn die Gewindedichtung kann nur in einer Positionierung montiert werden, in der die beiden mechanischen bzw. geometrischen Merkmale ineinandergreifen oder in definierter Orientierung zueinander liegen.

Eine formschlüssige Orientierung von Gewindedichtung zur Presshülse kann zudem ein fehlerhaftes Einsetzen oder Verdrehen vom Anwender verhindern.

Bei einer weiteren bevorzugten Ausgestaltung sind die erste Markierung und die zweite Markierung optische Markierungen und die erste Markierung und die zweite Markierung sind vor der Montage der Gewindedichtung in der Presshülse zumindest teilweise nach außen sichtbar. Damit kann entweder herstellungsseitig oder baustellenseitig eine einfache Montage der Gewindedichtung in der Presshülse erfolgen. Vorzugsweise sind die erste Markierung und die zweite Markierung als Strich oder als Punkt ausgebildet.

Eine optische Markierung ist günstiger in der Herstellung als eine mechanisch ausgebildete Markierung.

Die oben aufgezeigte Aufgabe wird auch durch eine Gewindedichtung für ein Fitting der zuvor beschriebenen Art gelöst mit einem Dichtungskörper, mit einem an der Innenseite des Dichtungskörpers zumindest abschnittsweise ausgebildeten, vorzugsweise sich durchgängig erstreckenden Innengewinde und mit einer Markierung.

Die Markierung kann als optische Markierung, vorzugsweise als Strich oder als Punkt ausgebildet sein. Ebenso kann die Markierung als mechanische Markierung, insbesondere in Form einer Nut, einer Rippe oder eines Anspritzpunkts ausgebildet sein.

Dabei ergeben sich die gleichen Vorteile, wie sie zuvor beschrieben worden sind.

Die oben aufgezeigte Aufgabe wird auch durch ein Fitting zum Herstellen einer fluiddichten Schraubverbindung für ein ein Außengewinde aufweisendes Rohr gelöst mit einem Fittinggrundkörper, mit einer mit dem Fittinggrundkörper verbundenen Presshülse, mit einer in der Presshülse ausgebildeten Kammer, mit einer in der Kammer angeordneten und ein Innengewinde aufweisenden Gewindedichtung und mit einem im Fittinggrundkörper am proximalen Ende der Presshülse ausgebildeten Innengewindeabschnitt.

Die Kombination von zwei Innengewinden hat den Vorteil, dass das Metallgewinde das anliegende Dichtelement vor mechanischer Belastung schützt.

Die eingebrachten Markierungen können somit bei der Montage in vordefinierter Position zueinander ausgerichtet werden, um einen annähernd durchgängigen Gewindegang von Gewindedichtung und dem Innengewindeabschnitt im Fittinggrundkörper zu erzeugen. Dabei werden die Markierungen, ausgehend von der gleichen Mittelachse der Gewinde, rotatorisch zueinander ausgerichtet.

Bei solchen Fittings zum Herstellen einer fluiddichten Schraubverbindung für ein ein Außengewinde aufweisendes Rohr gelöst mit einem Fittinggrundkörper, die auch als Gewindepressverbinder bezeichnet werden können, weist also zur Erhöhung der Verbindungsfestigkeit das Fitting selbst einen Teil des Innengewindes auf. Somit bilden die Dichtung und das Fitting zusammen das Innengewinde, in das das mit einem Außengewinde versehene Rohr eingeschraubt werden kann. Dazu wird im Fittinggrundkörper angrenzend an die Presshülse ein Gewindeabschnitt ausgebildet. Hierbei besteht die zusätzliche Anforderung, dass die Gewinde des fittingseitigen Gewindeabschnitts und des dichtungsseitigen Gewindes zueinander ausgerichtet werden, damit das zu verbindende und ein Außengewinde aufweisende Rohr in beide Gewindeabschnitte durchgängig eingeschraubt werden kann.

Die Durchgängigkeit der Innengewinde kann insbesondere dadurch gewährleistet werden, indem die Gewindedichtung derart in der Presshülse angeordnet ist, dass der Innengewindeabschnitt und das Innengewinde der Gewindedichtung zueinander gleichgängig sind, insbesondere so angeordnet, dass der Innengewindeabschnitt und das Innengewinde der Gewindedichtung einen durchgehenden Gewindegang bilden.

Zu diesem Zweck ist die Gewindedichtung insbesondere in azimutaler Richtung, d.h. in Bezug auf ihre Drehstellung bezogen auf die Mittelachse des Innengewindes, derart zur Presshülse ausgerichtet, dass der Innengewindeabschnitt und das Innengewinde der Gewindedichtung einen durchgehenden Gewindegang bilden.

Vorzugsweise sind die Gewindedichtung und die Presshülse in Bezug auf ihre Drehstellung bezogen auf die Mittelachse des Innengewindes (d.h. in azimutaler Richtung) zueinander festgelegt, insbesondere formschlüssig und/oder stoffschlüssig. Auf diese Weise kann die Ausrichtung des Innengewindes der Gewindedichtung zum Innengewindeabschnitt insbesondere werksseitig vorgenommen und fixiert werden, so dass diese Ausrichtung auch bei der späteren Montage bestehen bleibt und ein Ausrichten von Gewindedichtung und Innengewindeabschnitt zum Zeitpunkt der Montage entbehrlich macht.

Für eine formschlüssige Festlegung der Gewindedichtung und der Presshülse in azimutaler Richtung können die Gewindedichtung und die Presshülse in azimutaler Richtung insbesondere ein oder mehrere ineinander eingreifende Formschluss-Elemente, beispielsweise ein oder mehrere Vertiefungen und dazu korrespondierende ein oder mehrere Vorsprünge aufweisen, die ein Verdrehen der Gewindedichtung zur Presshülse verhindern. Für eine stoffschlüssige Festlegung können die Gewindedichtung und die Presshülse zum Beispiel miteinander verklebt sein.

Wenn die Gewindedichtung und die Presshülse in Bezug auf ihre Drehstellung bezogen auf die Mittelachse des Innengewindes (d.h. in azimutaler Richtung) zueinander festgelegt sind, kann auch auf die Markierungen verzichtet werden. Es ist jedoch auch denkbar, dass die erste und zweite Markierung gleichwohl vorgesehen sind, beispielsweise um die werksseitige Ausrichtung des Innengewindes zum Innengewindeabschnitt zu erleichtern. Weiterhin ist es denkbar, dass die Markierungen selbst die formschlüssige Festlegung bewirken. Es können jedoch auch von den Markierungen unabhängige Formschluss-Elemente vorgesehen sein.

Die Gewindedichtung und das Fitting können darüber hinaus auch wie oben beschrieben ausgebildet sein. Die Vorteile einer vereinfachten Montage, besseren Ausrichtung und gegebenenfalls verbesserten Verdrehsicherung ergeben sich auch in diesem Fall.

Die Gewindedichtung kann aus zahlreichen Materialien ausgebildet sein. Bevorzugt besteht der Dichtungskörper zumindest teilweise aus einem der folgenden Materialien besteht: Polytetrafluorethylen (PTFE), Ethylen-Propylen-Dien-Kautschuk (EPDM), Fluorkautschuk (FKM), Hydrierter Acrylnitrilbutadien-Kautschuk (HNBR), Polyethylen hoher Dichte (PE-HD), Chlorbutylkautschuk (CIIR), Polyamide (PA), Polyhydroxybuttersäure (PBH), Polybutadiene (butadiene rubber, PBR) und Polyetheretherketon (PEEK).

Das monolithische Dichtelement wird also bevorzugt aus einem Elastomer gefertigt. Die Fertigung aus einem anderen Kunststoff wie zu Beispiel einem Thermoplast ist ebenfalls denkbar. Das gewählte Material darf dabei keine zu hohe Festigkeit aufweisen und sollte, wenn es über ein E-Modul beschreibbar ist, ein E-Modul kleiner als 5500 MPa, vorzugsweise kleiner als 1500 MPa aufweisen.

Das Material, beziehungsweisen die Materialien, die ausgewählt werden, müssen dabei grundsätzlich in der Lage sein, eine Flächenpressung zu erreichen und mittels federelastischer Eigenschaften aufrecht zu erhalten, die höher ist als der anliegende Systeminnendruck.

Das Fitting besteht dagegen bevorzugt aus einem Metall oder einer Metalllegierung.

Im Folgenden wird die Erfindung anhand von Ausführungsbeispielen mit Bezug auf die Zeichnung erläutert. In der Zeichnung zeigen
- Fig. 1: ein erstes Ausführungsbeispiel eines Fittings und einer Gewindedichtung mit mechanisch ausgebildeten Markierungen zusammen mit einem Rohr mit einem Außengewinde in einer Explosionsdarstellung,
- Fig. 2: das in Fig. 1 dargestellte Ausführungsbeispiel im Zusammenbau mit einer Detailvergrößerung der Markierungen,
- Fig. 3: die in den Fig. 1 und 2 dargestellte Gewindedichtung einer perspektivischen Ansicht,
- Fig. 4: die in den Fig. 1 und 2 dargestellte Gewindedichtung im Querschnitt,
- Fig. 5: das in den Fig. 1 und 2 dargestellte Fitting mit eingesetzter Gewindedichtung im Querschnitt,
- Fig. 6: eine Gewindedichtung mit einer optischen Markierung in einer perspektivischen Ansicht,
- Fig. 7: ein Fitting mit einer optischen Markierung in einer perspektivischen Darstellung,
- Fig. 8: die Gewindedichtung nach Fig. 6 und das Fitting nach Fig. 7 im Zusammenbau,
- Fig. 9: das Fitting mit der Gewindedichtung nach Fig. 1 in einer geschnittenen Ansicht vor dem Einschrauben des Rohrs,
- Fig. 10: das Fitting nach Fig. 9 mit eingeschraubten Rohr und mit angesetzter Pressbacke,
- Fig. 11: das Fitting nach Fig. 10 in einer schematischen Darstellung im Querschnitt vor dem Verpressen,
- Fig. 12: das Fitting nach Fig. 11 nach dem Verpressen und
- Fig. 13: ein weiteres Ausführungsbeispiel eines Fittings und einer Gewindedichtung mit mechanisch ausgebildeten Markierungen zusammen mit einem Rohr mit einem Außengewinde in einer Explosionsdarstellung.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

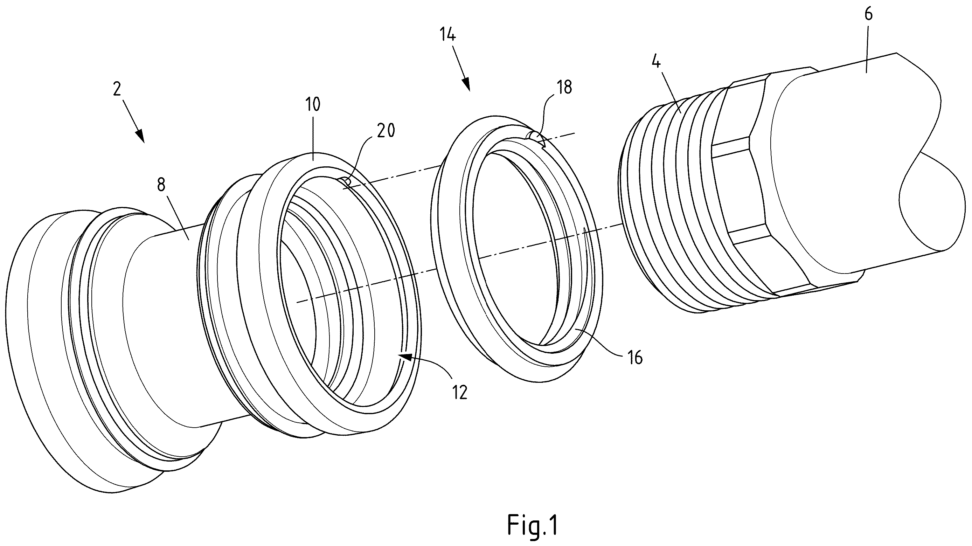

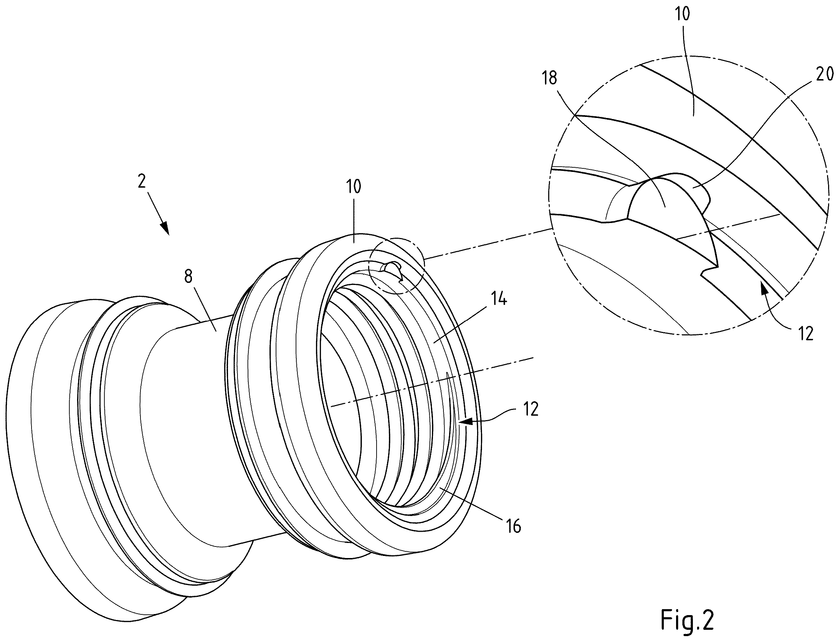

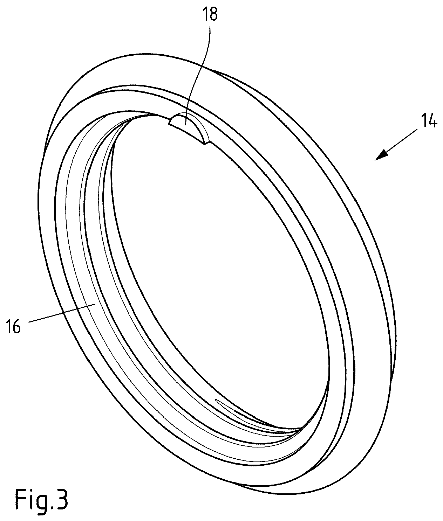

Die Fig. 1 bis 5 zeigen ein erstes Ausführungsbeispiel eines erfindungsgemäßen Fittings 2 zum Herstellen einer fluiddichten Schraubverbindung für ein ein Außengewinde 4 aufweisendes Rohr 6. Ein Fittinggrundkörper 8 ist vorgesehen, mit dem eine Presshülse 10 verbunden ist. In der Presshülse 10 ist eine Kammer 12 ausgebildet, in der eine Gewindedichtung 14 angeordnet ist, die wiederum ein Innengewinde 16 aufweist.

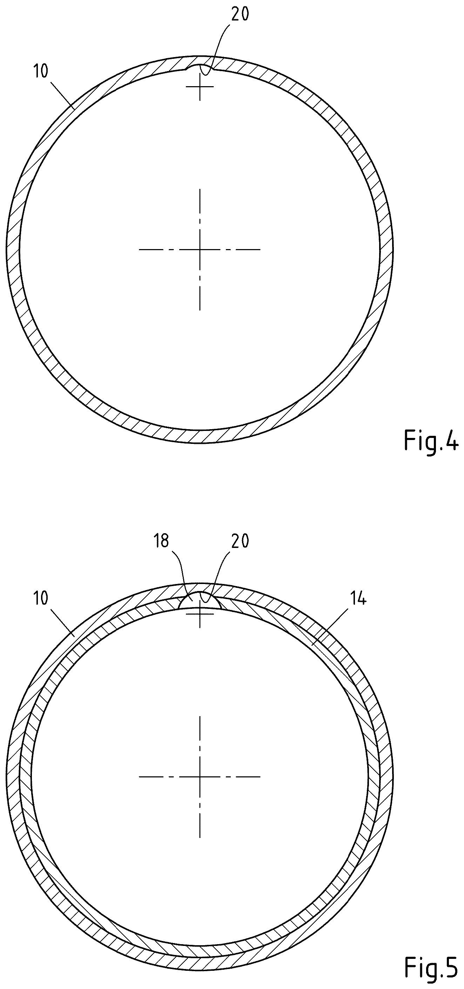

An der Presshülse 10 ist eine erste Markierung 18 ausgebildet und an der Gewindedichtung 14 ist eine zweite Markierung 20 ausgebildet. Die Markierungen 18 und 20 sind ausgehend von der gleichen - in Fig. 4 und 5 als mittiges Kreuz dargestellten - Mittelachse der Presshülse 10 und des Innengewindes 16 der Gewindedichtung 14 rotatorisch zueinander ausrichtbar. Daher können die Markierungen 18 und 20 bei der Montage der Gewindedichtung 14 in azimutaler Richtung, also in Drehrichtung in Übereinstimmung gebracht werden.

Bei diesem Ausführungsbeispiel sind die erste Markierung 18 und die zweite Markierung 20 zueinander zumindest teilweise korrespondierende mechanisch ausgebildete Markierungen. Die Markierung 18 an der Gewindedichtung 14 ist ein teilkreisförmiges Element, das im verbundenen Zustand teilweise in die als runde Ausnehmung ausgebildete Ausnehmung 20 eingreift. Dadurch kommt es zu einem Formschluss zwischen den beiden Markierungen 18 und 20, der die richtige azimutale Ausrichtung der Presshülse 10 und der Gewindedichtung 14 zueinander sicherstellt und ein Verdrehen - zumindest bis zu einer maximalen Kraft - verhindert. Somit ist auch ein Kraftschluss realisiert.

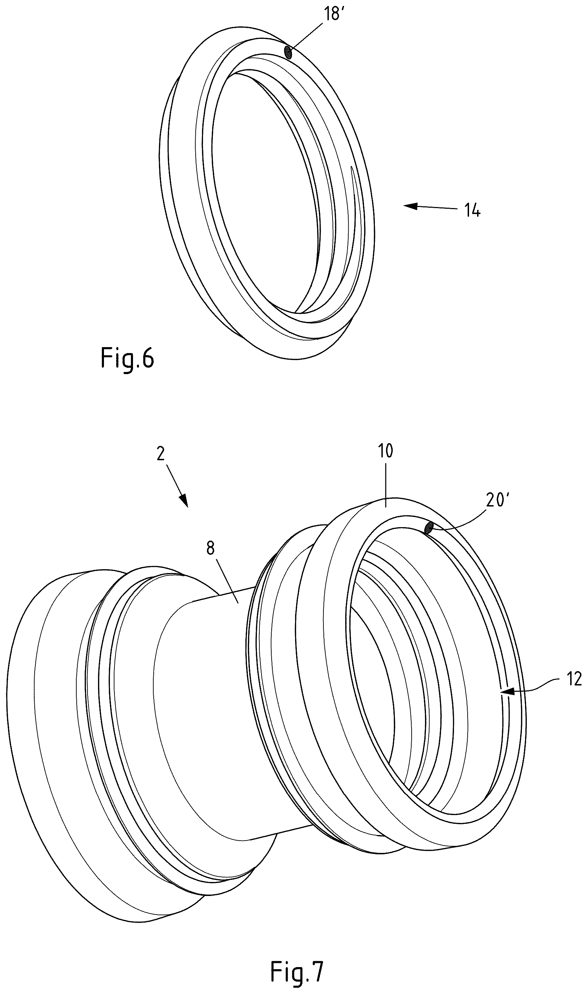

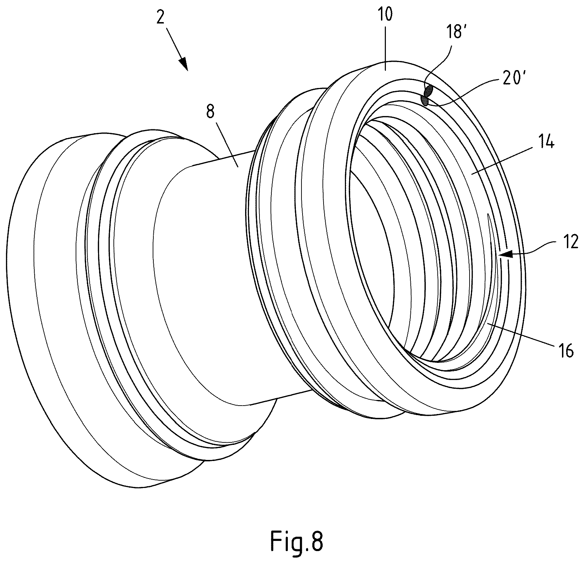

In den Fig. 6 bis 8 zeigen ein Ausführungsbeispiel eines Fittings 2 mit einer Gewindedichtung 14 mit einer im Wesentlichen gleichen Ausgestaltung, wie sie zuvor anhand der Fig. 1 bis 5 beschreiben worden ist. Hier ist im Gegensatz zum ersten Ausführungsbeispiel die erste Markierung 18' und die zweite Markierung 20' optische Markierungen, wobei die erste Markierung 18' und die zweite Markierung 20' vor der Montage der Gewindedichtung 14 in der Presshülse 10 zumindest teilweise nach außen sichtbar sind. Dabei sind die erste Markierung 18' und die zweite Markierung 20' als Punkt ausgebildet.

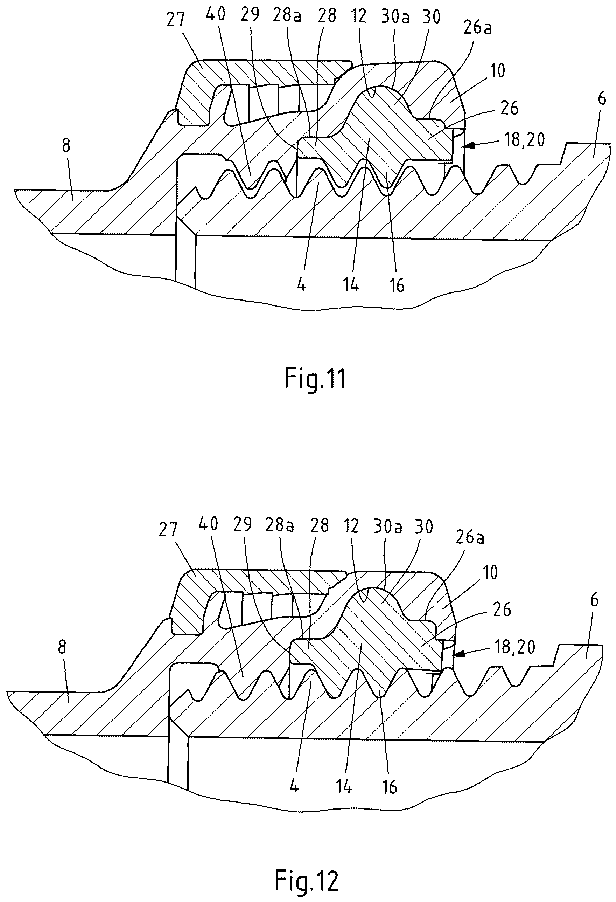

Wie sich insbesondere aus den Fig. 11 und 12 ergibt, weist die Gewindedichtung 14 einen Dichtungskörper 24 mit einem bezogen auf die Anordnung im Fitting 2 distalen Endabschnitt 26, mit einem bezogen auf die Anordnung im Fitting proximalen Endabschnitt 28 und mit einem zwischen dem distalen Endabschnitt 26 und dem proximalen Endabschnitt 28 angeordneten Mittelabschnitt 30 auf.

Das Innengewinde 16 des Dichtungskörpers 24 erstreckt sich durchgängig über den distalen Endabschnitt 26, den Mittelabschnitt 30 und den proximalen Endabschnitt 28. Die Außenkontur 30a des Mittelabschnitts 30 steht radial über die Außenkontur 26a des distalen Endabschnitts 26 und über die Außenkontur 28a des proximalen Endabschnitts 28 vor. Zudem ist der Dichtungskörper 24 monolithisch ausgebildet.

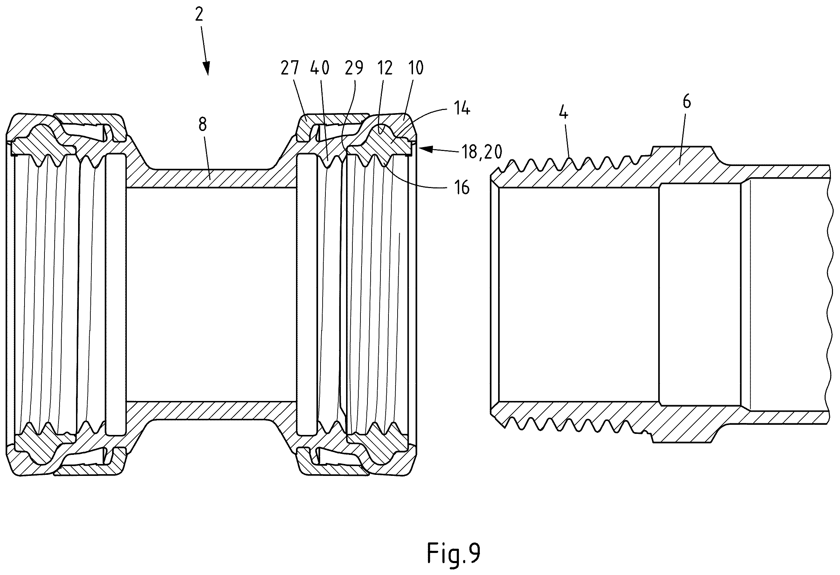

In den Fig. 9 bis 12 ist ein Fitting 2 zum Herstellen einer fluiddichten Schraubverbindung für ein ein Außengewinde 4 aufweisendes Rohr 6 dargestellt. Wie bereits beschrieben sind ein Fittinggrundkörper 8 und eine mit dem Fittinggrundkörper 8 verbundenen Presshülse 10 mit einer darin ausgebildeten Kammer 12 vorgesehen. In der Kammer 12 ist eine Gewindedichtung 14 angeordnet, die ein Innengewinde 16 aufweist.

Des Weiteren ist bei diesem Ausführungsbeispiel im Fittinggrundkörper 8 am proximalen Ende der Presshülse 10 ein Innengewindeabschnitt 40 ausgebildet. Die Gewindedichtung 14 ist zudem derart in der Presshülse 10 angeordnet ist, dass der Innengewindeabschnitt 40 und das Innengewinde 16 der Gewindedichtung 14 zueinander gleichgängig sind, insbesondere einen durchgehenden Gewindegang ausbilden.

Für die beschriebene Gleichgängigkeit ist es vorteilhaft, wenn die Gewindedichtung 14 mit Hilfe der ersten Markierung 18 bzw. 18' und der zweiten Markierung 20 bzw. 20' so in der Presshülse 10 angeordnet worden ist, dass das Innengewinde 16 der Gewindedichtung 14 und das Innengewindeabschnitt 40 des Fittinggrundkörpers 8 zueinander ausgerichtet sind.

Der Drehwinkel der eingesetzten Gewindedichtung 14 in Bezug auf den Fittinggrundkörper 8 wird durch die Markierungen 18 bzw. 18' und 20 bzw. 20' so vorgegeben, dass die Gleichgängigkeit der beiden Gewindeabschnitte 16 und 40 erreicht und eingehalten wird. Dabei gilt, dass die Gewindeabschnitte 16 und 40 zueinander gleichgängig sind, wenn der Abstand aller Gewindespitzen zueinander jeweils ein n-faches der Gewindesteigung beträgt. Auf diese Weise bilden die Gewindeabschnitte 16 und 40 insbesondere einen durchgehenden Gewindegang.

Zusätzlich oder alternativ zu den Markierungen 18 und 20 bzw. 18' und 20' können die Gewindedichtung 14 und die Presshülse 10 auch gesonderte zueinander korrespondierende Formschluss-Elemente aufweisen, die die azimutale Ausrichtung der Gewindedichtung 14 zur Presshülse 10, d.h. den Drehwinkel der Gewindedichtung 14, festlegen. Beispielsweise können die zueinander korrespondierenden Formschluss-Elemente durch die Außenkontur 30a des Mittelabschnitts 30 und die korrespondierende Innenkontur der Kammer 12 gebildet werden, indem diese in azimutaler Richtung zueinander korrespondierende Vertiefungen und Vorsprünge aufweisen, die ein Verdrehen der Gewindedichtung 14 zur Presshülse 10 formschlüssig verhindern.

Weiterhin kann die Gewindedichtung 14 herstellungsseitig in die Presshülse 10 eingeklebt sein und auf diese Weise die azimutale Ausrichtung der Gewindedichtung 14 zur Presshülse 10 festlegen werden.

Wie aus den Fig. 9 bis 12 ersichtlich ist, ist am proximalen Ende der Presshülse 10 ein von der Kammer 12 beabstandetes und radial nach außen vorstehendes Führungselement 27 in Form eines separaten und mit der Presshülse 10 verbundenen Teils ausgebildet. Das Führungselement 27 dient im Wesentlichen dazu, dass eine Pressbacke eines Presswerkzeugs leichter und genauer angesetzt werden kann.

Die Außenseite der Presshülse 10 weist am distalen Ende der Kammer 12 einen Durchmesser auf, der dem äußeren Durchmesser des vorstehenden Führungselements 27 entspricht. Insgesamt ergibt sich also eine asymmetrische Kontur der Presshülse 10.

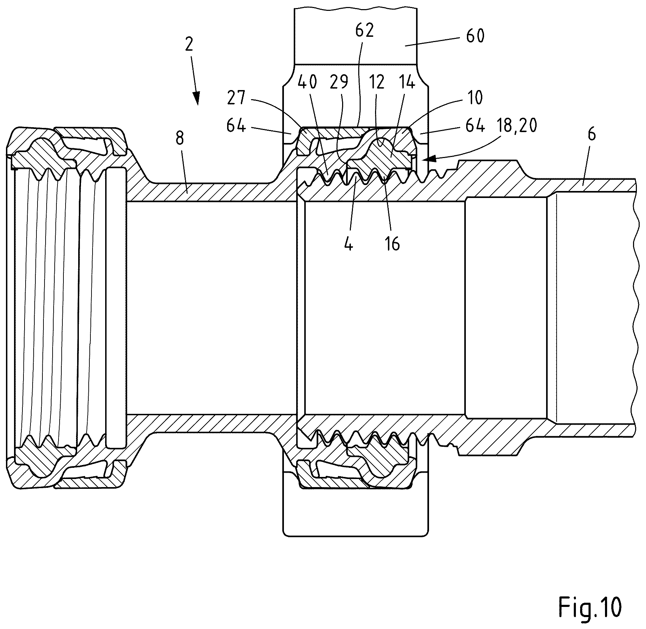

Fig. 10 zeigt das Fitting 2 mit eingeschraubtem Rohr 6 im unverpressten Zustand und mit angesetzter Pressbacke 60, die eine im Wesentlichen zylindrische Presskontur 62 aufweist. Lediglich an zwei Positionen der umlaufenden Presskontur 62 sind radial nach innen vorstehende Abschnitte 64 ausgebildet, die mit der Presshülse 12 jeweils außerhalb der Kammer 10 und des Führungselements 27 angreifen. Die auch als Führungsnocken bezeichneten vorstehenden Abschnitte 64 führen zu einer geringeren Presskraft als ein umlaufender Führungssteg, der auch während des Umformens das Fitting 2 führen würde.

Die Fig. 11 und 12 zeigen das Fitting 2 vor und nach dem Verpressen anhand einer schematischen Darstellung.

Die zylindrische Presskontur 62 verformt die Presshülse 10 beim radial einwärtigen Pressvorgang, also das distale Ende der Kammer 12 sowie das Führungselement 27, wodurch es vor allem zu einem Verbiegen der Presshülse 10 kommt. Dieses Verbiegen wird im Rahmen dieser Beschreibung auch als Umklappen bezeichnet. Somit weist die Presshülse 10 eine einseitig umklappende Geometrie auf. Zudem verbiegt sich das Führungselement 27 nach innen.

Durch das Umklappen der Presshülse 10 wird einerseits durch die radial nach innen umgeformte Kammer 12 das Dichtelement 2 fest auf das Rohr 6 und den Gewindeabschnitt 4 gepresst. Dadurch entsteht ein mehrere Gewindegänge der Gewindeabschnitte 4 sowie 16 und 40 langer Abschnitt, entlang dessen das Dichtelement 2 abdichtend mit dem Rohr 6 verbunden ist.

Presskräfte und Umformgrad können durch die einseitig umklappende Geometrie der Presshülse 10 gezielt eingestellt werden. Durch die Reduktion der Größe des umzuformenden Bereiches der Presshülse 10 werden die Presskräfte reduziert und Wandstärken können dennoch aufrechterhalten werden.

Das Fitting 2 besteht beispielsweise aus Siliziumbronze, kann aber aus jedem anderen Metall oder Legierung hergestellt sein. Das Fitting 2 wird auf ein Außengewinde nach DIN EN 10226 oder ISO 228 geschraubt und anschließend verpresst.

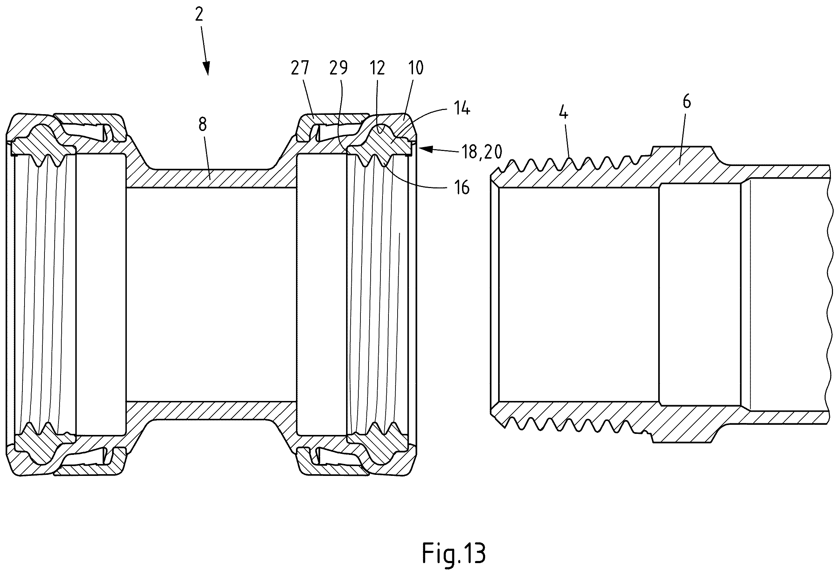

Fig. 13 zeigt schließlich ein Ausführungsbeispiel, bei dem im Gegensatz zu dem zuvor erläuterten Ausführungsbeispiel der Fittinggrundkörper 8 kein Innengewindeabschnitt aufweist und ein Verschrauben des Rohrs 6 mit dem Fitting 2 nur über die Gewindedichtung 14 mit Gewinde 16 erfolgt.

## Patentansprüche

1. Fitting zum Herstellen einer fluiddichten Schraubverbindung für ein ein Außengewinde (4) aufweisendes Rohr (6),
- mit einem Fittinggrundkörper (8),
- mit einer mit dem Fittinggrundkörper (8) verbundenen Presshülse (10),
- mit einer in der Presshülse (10) ausgebildeten Kammer (12),
- mit einer in der Kammer (12) angeordneten und ein Innengewinde (16) aufweisenden Gewindedichtung (14),
- mit einer an der Presshülse (10) angeordneten ersten Markierung (18, 18') und
- mit einer an der Gewindedichtung (14) angeordneten zweiten Markierung (20, 20'),
- wobei die Markierungen (18, 18'; 20, 20') ausgehend von der gleichen Mittelachse des Innengewindes (16) der Gewindedichtung (14) und der Presshülse (10) rotatorisch zueinander ausrichtbar sind.

2. Fitting nach Anspruch 1,
**dadurch gekennzeichnet,**
**dass** die erste Markierung (18) und die zweite Markierung (20) zueinander zumindest teilweise korrespondierende mechanisch ausgebildete Markierungen sind.

3. Fitting nach Anspruch 2,
**dadurch gekennzeichnet,**
**dass** die erste Markierung (18) und die zweite Markierung (20) eine Markierung in Form einer Nut und einer Rippe oder eine in Form eines Anspritzpunkts ausgebildet sind.

4. Fitting nach Anspruch 2 oder 3,
**dadurch gekennzeichnet,**
**dass** die erste Markierung (18) und die zweite Markierung (20) einen Formschluss und/oder einen Kraftschluss zwischen der Gewindedichtung (14) und der Presshülse (10) ausbilden.

5. Fitting nach Anspruch 1,
**dadurch gekennzeichnet,**
- **dass** die erste Markierung (18') und die zweite Markierung (20') optische Markierungen sind und
- **dass** die erste Markierung (18') und die zweite Markierung (20') vor der Montage der Gewindedichtung (14) in der Presshülse (10) zumindest teilweise nach außen sichtbar sind.

6. Fitting nach Anspruch 5,
**dadurch gekennzeichnet,**
**dass** die erste Markierung (18') und die zweite Markierung (20') als Strich oder als Punkt ausgebildet sind.

7. Fitting nach einem der Ansprüche 1 bis 6,
**dadurch gekennzeichnet,**
- **dass** der Fittinggrundkörper (8) am proximalen Ende der Presshülse (10) einen Innengewindeabschnitt (40) aufweist und
- **dass** die Gewindedichtung (14) mit Hilfe der ersten Markierung (18, 18') und der zweiten Markierung (20, 20') so in der Presshülse (10) angeordnet ist, dass das Innengewinde (16) der Gewindedichtung (14) und der Innengewindeabschnitt (40) der Presshülse (10) zueinander gleichgängig sind.

8. Gewindedichtung für ein Fitting nach einem der Ansprüche 1 bis 7,
- mit einem Dichtungskörper (24),
- mit einem an der Innenseite des Dichtungskörpers (24) zumindest abschnittsweise ausgebildeten, vorzugsweise sich durchgängig erstreckenden Innengewinde (16) und
- mit einer Markierung (18, 18').

9. Gewindedichtung nach Anspruch 8,
**dadurch gekennzeichnet,**
**dass** die Markierung (18) als mechanische Markierung, insbesondere in Form einer Nut, einer Rippe oder eines Anspritzpunkts ausgebildet ist.

10. Gewindedichtung nach Anspruch 8,
**dadurch gekennzeichnet,**
**dass** die Markierung (20) als optische Markierung, vorzugsweise als Strich oder als Punkt ausgebildet ist.

11. Fitting zum Herstellen einer fluiddichten Schraubverbindung für ein ein Außengewinde (4) aufweisendes Rohr (6),
- mit einem Fittinggrundkörper (8),
- mit einer mit dem Fittinggrundkörper (8) verbundenen Presshülse (10),
- mit einer in der Presshülse (10) ausgebildeten Kammer (12),
- mit einer in der Kammer (10) angeordneten und ein Innengewinde (16) aufweisenden Gewindedichtung (14) und
- mit einem im Fittinggrundkörper (8) am proximalen Ende der Presshülse (10) ausgebildeten Innengewindeabschnitt (40).

12. Fitting nach Anspruch 11,
**dadurch gekennzeichnet,**
- **dass** die Gewindedichtung (14) derart in der Presshülse (10) angeordnet ist, dass der Innengewindeabschnitt (40) und das Innengewinde (16) der Gewindedichtung (14) zueinander gleichgängig sind, insbesondere einen durchgehenden Gewindegang bilden.

13. Fitting nach Anspruch 11 oder 12,
**dadurch gekennzeichnet,**
- **dass** die Gewindedichtung (14) und die Presshülse (10) in Bezug auf ihre Drehstellung bezogen auf die Mittelachse des Innengewindes zueinander festgelegt sind, vorzugsweise form- und/oder stoffschlüssig.

14. Fitting nach einem der Ansprüche 11 bis 13,
**dadurch gekennzeichnet,**
**dass** die Gewindedichtung nach einem der Ansprüche 8 bis 10 ausgebildet ist.
